(19) Europäisches Patentamt / European Patent Office / Office européen des brevets

(11) **EP 3 381 987 A1**

(12) **EUROPÄISCHE PATENTANMELDUNG**

(43) Veröffentlichungstag:
03.10.2018 Patentblatt 2018/40

(51) Int Cl.:
**C09D 5/08** (2006.01)   **C09D 7/61** (2018.01)
**C22C 18/00** (2006.01)   **C23F 13/02** (2006.01)

(21) Anmeldenummer: 18161370.4

(22) Anmeldetag: 09.11.2010

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.11.2009 DE 102009052399**

(62) Dokumentnummer(n) der früheren Anmeldung(en) nach Art. 76 EPÜ:
**10774228.0 / 2 499 205**

(71) Anmelder: **ECKART GmbH**
**91235 Hartenstein (DE)**

(72) Erfinder:
• **Plagemann, Peter**
**28329 Bremen (DE)**
• **Zockoll, Anja**
**45277 Essen (DE)**
• **Weise, Jörg**
**28199 Bremen (DE)**

(74) Vertreter: **Altana IP Department**
**Altana Management Services GmbH**
**Abelstraße 45**
**46483 Wesel (DE)**

Bemerkungen:
Diese Anmeldung ist am 13-03-2018 als Teilanmeldung zu der unter INID-Code 62 erwähnten Anmeldung eingereicht worden.

(54) **GRUNDKÖRPER MIT KORROSIONSSCHUTZBESCHICHTUNG UND VERFAHREN ZUR HERSTELLUNG EINER KORROSIONSSCHUTZBESCHICHTUNG**

(57) Die vorliegende Erfindung betrifft einen Gegenstand umfassend einen Grundkörper aus einem Metall ausgewählt aus der Gruppe bestehend aus Aluminium und Aluminiumlegierungen oder umfassend Bereiche aus einem Metall ausgewählt aus der Gruppe bestehend aus Aluminium und Aluminiumlegierungen und eine Korrosionsschutzbeschichtung, sowie die Verwendung einer Mischung zur Herstellung einer Korrosionsschutzbeschichtung für den Korrosionsschutz von Metallen aus der Gruppe bestehend aus Aluminium und Aluminiumlegierungen, ein Verfahren zur Herstellung einer Korrosionsschutzbeschichtung auf einer Oberfläche eines Metalls ausgewählt aus der Gruppe bestehend aus Aluminium und Aluminiumlegierungen, und die Verwendung einer Korrosionsschutzbeschichtung für den Korrosionsschutz von Bauteilen aus Metallen ausgewählt aus der Gruppe bestehend aus Aluminium und Aluminiumlegierungen.

EP 3 381 987 A1

**Beschreibung**

Die vorliegende Erfindung betrifft einen Gegenstand umfassend einen Grundkörper aus einem Metall ausgewählt aus der Gruppe bestehend aus Aluminium und Aluminiumlegierungen oder umfassend Bereiche aus einem Metall ausgewählt aus der Gruppe bestehend aus Aluminium und Aluminiumlegierungen und eine Korrosionsschutzbeschichtung, sowie die Verwendung einer Mischung zur Herstellung einer Korrosionsschutzbeschichtung für den Korrosionsschutz von Metallen aus der Gruppe bestehend aus Aluminium und Aluminiumlegierungen, ein Verfahren zur Herstellung einer Korrosionsschutzbeschichtung auf einer Oberfläche eines Metalls ausgewählt aus der Gruppe bestehend aus Aluminium und Aluminiumlegierungen, und die Verwendung einer Korrosionsschutzbeschichtung für den Korrosionsschutz von Bauteilen aus Metallen ausgewählt aus der Gruppe bestehend aus Aluminium und Aluminiumlegierungen.

Die Korrosion eines Bauteils aus Metall führt dazu, dass seine Funktionsfähigkeit deutlich eingeschränkt ist und hat außerdem den Nachteil, dass das Erscheinungsbild der Metalloberfläche leidet. Viele Bauteile aus Metall werden deshalb mit (in der Regel organischen) Schichten versehen, um die Korrosionsprozesse zu verlangsamen oder soweit möglich zu verhindern. Insbesondere Bauteile aus Aluminium und Aluminiumlegierungen sind häufig auf Korrosionsschutzmaßnahmen angewiesen. Aluminiumlegierungen, insbesondere solche des Systems Al-Cu (2000er Legierungen) unterliegen einem verstärkten Korrosionsangriff, weil die zulegierten Elemente, welche die Festigkeit der Legierung verbessern, den Korrosionswiderstand durch die Bildung von mikroskopischen Lokalelementen verringern. Auf der anderen Seite werden gerade solche Legierungen aufgrund ihrer guten mechanischen Eigenschaften häufig im Luftfahrtsbereich eingesetzt, wo besonders strenge Anforderungen an das Korrosionsverhalten gelten.

Der unedle Charakter von Aluminium und seinen Legierungen schränkt die Wahl von geeigneten Korrosionsschutzpigmenten stark ein. Beispielsweise Zinkstaub, der erfolgreich als aktives Korrosionsschutzpigment in Grundierungen zum Schutz von Stahloberflächen eingesetzt wird, ist für den Korrosionsschutz von Aluminium-Substraten nicht geeignet, da Zink ein positiveres elektrochemisches Potential als Aluminium besitzt und so die Korrosionsreaktion des Aluminiums forcieren würde. Daher werden zum Korrosionsschutz von Aluminium und seinen Legierungen häufig Korrosionsschutzpigmente auf Inhibitorbasis zum Einsatz. Hier sind insbesondere Pigmente auf Basis von sechswertigem Chrom zu nennen, die einen vorzüglichen Korrosionsschutz bieten, allerdings aus gesundheitlichen und ökologischen Gründen in den meisten technischen Bereichen mittlerweile verboten sind.

Die WO 2005/051551 beschreibt die Verwendung von Pigmenten auf Magnesiumbasis zum Korrosionsschutz von Aluminiumbauteilen. Derartige Pigmente haben aber den Nachteil, dass Magnesiumpulver sehr reaktiv ist und daher speziell oberflächenoxidierte Pulverqualitäten zum Einsatz kommen müssen. Weiterhin sind für derartige Pulver verschiedenste Sicherheitsmaßnahmen bei der Handhabung zu beachten.

Auch für Bauteile aus anderen Metallen, z.B. aus Stahl oder mit einem zinkhaltigen Überzug versehenem Stahl, besteht ein ständiger Bedarf nach geeigneten Zusammensetzungen für Korrosionsschutzbeschichtungen. Die Aufgabe der vorliegenden Erfindung besteht darin, eine Korrosionsschutzbeschichtung bereitzustellen, die einen wirksameren Korrosionsschutz, insbesondere einen effektiven kathodischen Korrosionsschutz von Bauteilen aus Metallen ausgewählt aus der Gruppe bestehend aus Aluminium, Aluminiumlegierungen, Stahl und mit einem zinkhaltigen Überzug versehenem Stahl gewährleistet, sowie eine Mischung zur Herstellung einer solchen Korrosionsschutzbeschichtung. Bevorzugt sollten diese Korrosionsschutzbeschichtung und die Mischung zu ihrer Herstellung außerdem umweltfreundlich sein, insbesondere keine Chromverbindungen enthalten.

Zur Lösung dieser Aufgabe wird gemäß Anspruch 1 ein Gegenstand vorgeschlagen umfassend einen Grundkörper aus einem Metall ausgewählt aus der Gruppe bestehend aus Aluminium und Aluminiumlegierungen oder umfassend Bereiche aus einem Metall ausgewählt aus der Gruppe bestehend aus Aluminium und Aluminiumlegierungen, und eine Korrosionsschutzbeschichtung n umfassend

- ein ggf. ausgehärtetes Bindemittel oder Bindemittelsystem,

- in dem ggf. ausgehärteten Bindemittel oder Bindemittelsystem verteilte Partikel eines Korrosionsschutzpigments aus einer Legierung aus Zink und Magnesium mit einem Zinkgehalt von 74 bis 90 Gew.-%, bevorzugt 74 bis 80 Gew.-%, und insbesondere 74 Gew.-%,

- vorzugsweise keine Chromverbindungen, insbesondere kein Chromat,

- ggf. weitere partikelförmige Feststoffe,
  wobei die Pigmentvolumenkonzentration in der Korrosionsschutzbeschichtung 90 bis 110 % der zum Erreichen der Perkolationsschwelle nötigen Pigmentvolumenkonzentration beträgt,
  wobei die Partikel des besagten Korrosionsschutzpigments lamellenförmige Partikel sind,
  wobei die Korrosionsschutzbeschichtung den aus Metall bestehenden Grundkörper bzw. die metallischen Bereiche des Grundkörpers zumindest teilweise bedeckt.

Wird ein Korrosionsschutzpigment eingesetzt, dessen Partikel im wesentlichen sphärisch sind, dann beträgt die Pigmentvolumenkonzentration in der Korrosionsschutzbeschichtung vorzugsweise 90 bis 110 % der kritischen Pigmentvolumenkonzentration.

Weiterhin betrifft die Erfindung die Verwendung einer Mischung zur Herstellung einer Korrosionsschutzbeschichtung für den Korrosionsschutz von Metallen ausgewählt aus der Gruppe bestehend aus Aluminium und Aluminiumlegierungen, umfassend

- ein Bindemittel oder Bindemittelsystem,

- in dem Bindemittel oder Bindemittelsystem verteilte Partikel eines Korrosionsschutzpigments aus einer Legierung aus Zink und Magnesium mit einem Zinkgehalt von 74 bis 90 Gew.-%, bevorzugt 74 bis 80 Gew.-%, und insbesondere 74 Gew.-%,

- vorzugsweise keine Chromverbindungen, insbesondere kein Chromat,

- ggf. ein oder mehrere Lösungsmittel,

- ggf. weitere partikelförmige Feststoffe,
  wobei die auf die nichtflüchtigen Bestandteile der Mischung bezogene Pigmentvolumenkonzentration 90 bis 110 % der zum Erreichen der Perkolationsschwelle nötigen Pigmentvolumenkonzentration beträgt,

wobei die Partikel des besagten Korrosionsschutzpigments lamellenförmige Partikel sind.

Wird eine Mischung umfassend ein Korrosionsschutzpigment eingesetzt, dessen Partikel im wesentlichen sphärisch sind, dann beträgt die auf die nichtflüchtigen Bestandteile der Mischung bezogene Pigmentvolumenkonzentration vorzugsweise 90 bis 110 % der kritischen Pigmentvolumenkonzentration.

Weiterhin betrifft die vorliegenden Erfindung Verfahren zur Herstellung einer Korrosionsschutzbeschichtung, sowie die Verwendung einer Korrosionsschutzbeschichtung.

Weitere Ausführungsformen, Details und Vorteile der Erfindung sind der nachfolgenden detaillierten Beschreibung, den Ausführungsbeispielen, den Ansprüchen und den Figuren zu entnehmen. Die Figuren zeigen:

Figur 1:    Korrosionspotentiale der erfindungsgemäß eingesetzten Korrosionsschutzpigmente im Vergleich zu zwei unterschiedlichen Aluminiumlegierungen (AA 2024, AA 5754), Aluminium (99,5% rein) und Zink

Figur 2:    Proben des Ausführungsbeispiel 1 nach 3000 Stunden (links) und 10000 Stunden (rechts) Salzsprühnebeltest

Figur 3:    Proben des Ausführungsbeispiels 2 nach 3000 Stunden Salzsprühnebeltest

Figur 4:    Proben des Ausführungsbeispiels 3 nach 10000 Stunden Salzsprühnebeltest

Figur 5:    Proben des Vergleichsbeispiels nach 3000 Stunden Salzsprühnebeltest

Figur 6:    Ruhepotentiale von unlegiertem Stahl, der Ausführungsbeispiele 4 und 5 und des Vergleichsbeispiels 2 in wässriger Natriumchlorid-Lösung (3 Gew.-% NaCl)

Figur 7:    Ruhepotentiale von verzinktem Stahl, des Ausführungsbeispiels 6 und des Vergleichsbeispiels 3 in wässriger Natriumchlorid-Lösung (3 Gew.-% NaCl)

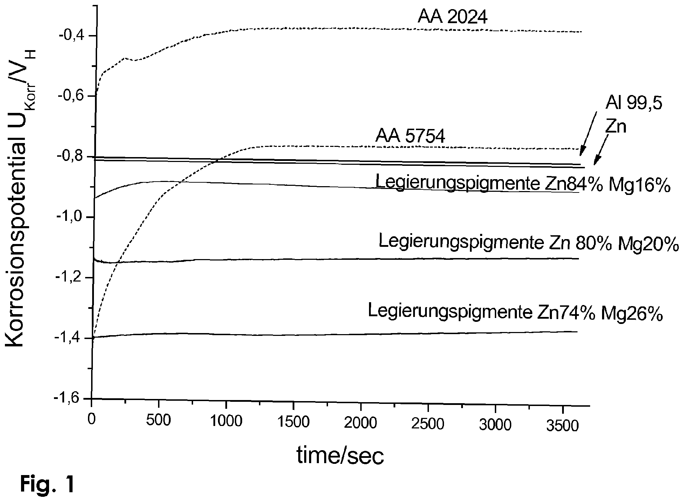

Das in der erfindungsgemäßen Korrosionsschutzbeschichtung und in der Mischung zu ihrer Herstellung eingesetzte Korrosionsschutzpigment besteht aus einer Legierung aus Zink und Magnesium, wobei der Zinkgehalt der Legierung 90 Gew.-% oder weniger, bevorzugt 74 bis 84 Gew.-%, besonders bevorzugt 80 Gew.-% oder weniger, weiter bevorzugt 74 bis 80 Gew.-%, und insbesondere 74 Gew.-% beträgt. Bevorzugt beträgt der Zink-Gehalt der Legierung der Korrosionsschutzpigmente mehr als 6 Gew.-%, weiter bevorzugt 8 Gew.-% oder mehr. Erfindungsgemäß bevorzugt ist der Zink-Gehalt der Zink-Magnesium-Legierung jedoch deutlich höher und beträgt bevorzugt 40 Gew.-% oder mehr, weiter bevorzugt 50 Gew.-% oder mehr, und insbesondere bevorzugt 60 Gew.-% oder mehr. Korrosionsschutzpigmente dieser Zusammensetzung ermöglichen einen kathodischen Korrosionsschutz von Aluminiumsubstraten, da ihr Korrosionspotential negativer ist als das des Aluminiums, siehe Figur 1. Das bedeutet, dass das in der erfindungsgemäßen Korrosionsschutzbeschichtung eingesetzte Korrosionsschutzpigment unedler ist als das Aluminiumsubstrat und daher gegenüber Aluminium als Opferanode wirken kann. Der Einsatz der erfindungsgemäßen Korrosionsschutzbeschichtung ist jedoch nicht auf Substrate beschränkt, die Aluminium enthalten bzw. aus Aluminium bestehen. Vielmehr sind die erfindungsgemäßen Korrosionsschutzbeschichtungen für den Korrosionsschutz sämtlicher Metalle und Legierungen geeignet, die ein im Vergleich zu den Korrosionsschutzpigmenten positiveres Korrosionspotential aufweisen. Korrosionsschutzpigmente, die sich unedler verhalten, also ein negativeres Korrosionspotential haben als das darunterliegende Metallsubstrat, sind besonders vorteilhaft, denn bei einer Freilegung des Metallsubstrats durch Verletzung der Korrosionsschutzbeschichtung wird ein kathodischer Korrosionsschutz wirksam, und das Metallsubstrat ist trotz der Verletzung der Korrosionsschutzbeschichtung weiterhin geschützt.

Beispiele für weitere Metalle, für die die erfindungsgemäße Korrosionsschutzbeschichtung geeignet ist, sind Stahl und mit einem zinkhaltigen Überzug versehener Stahl. Unter "mit einem zinkhaltigen Überzug versehener Stahl" wird im Rahmen der vorliegenden Erfindung sowohl verzinkter Stahl verstanden als auch Stahl mit einem metallischem Überzug, der einen maßgeblichen Anteil an Zink enthält, wie z. B. Galvan®, welches neben Zink noch etwa 5 Gew.-% Aluminium enthält, oder z. B. ein Galvalume®-Überzug, der neben Zink noch 55 Gew.-% Aluminium und 1,6 Gew.-% Silizium enthält. Bevorzugt enthält ein derartiger zinkhaltiger Überzug 40 bis 100 Gew.-% Zink, besonders bevorzugt 90 bis 100 Gew-% Zink.

Hinsichtlich der Anwendung der erfindungsgemäßen Korrosionsschutzbeschichtung auf verschiedene Substrate ist anzumerken, dass nicht jede erfindungsgemäße Beschichtung für jedes Substrat gleichermaßen gut geeignet sein muss. Für den Fachmann ist es jedoch auf der Basis seines Fachwissens und durch einfache Tests ohne unzumutbaren Aufwand möglich, für jedes der o.g. Substrate die am besten geeignete erfindungsgemäße Korrosionsschutzbeschichtung zu identifizieren.

Die erfindungsgemäß einzusetzenden Korrosionsschutzpigmente sind Legierungen aus Zink und Magnesium. D.h. es liegt nicht nur eine einfache Mischung von zwei Metallpulvern vor, vielmehr wird eine Legierung erstellt, die aus neuen Phasen z. B. intermetallische Phasen, besteht. Bevorzugt enthält das Korrosionsschutzpigment der erfindungsgemäßen Korrosionsschutzbeschichtung intermetallische Phasen, besonders bevorzugt die intermetallische Phase MgZn.

Der Anteil intermetallischer Phasen an der erfindungsgemäß als Korrosionsschutzpigment einzusetzenden Legierung beträgt üblicherweise 40 Gew.-% oder mehr. Die Legierung kann sowohl im thermodynamischen Gleichgewicht (thermodynamisch stabil) als auch in Form von Nichtgleichgewichtsphasen vorliegen. Das Auftreten von Nichtgleichgewichtsphasen kann insbesondere durch die Herstellungsverfahren und -bedingungen verursacht werden, so z.B. durch eine schnelle Abkühlung von gegossenen Blöcken, die anschließend zu Pulver zermahlen werden, oder durch die Pulverherstellung durch Verdüsen. Diese Verfahren sind Stand der Technik.

Die Partikel des erfindungsgemäß eingesetzten Korrosionsschutzpigments werden bevorzugt durch Versprühen (Verdüsen) der entsprechenden Zink-Magnesium-Legierung unter Inertgas hergestellt. Mit dieser Herstellungsmethode sind Partikel mit kleinen Abmessungen bei einer engen Partikelgrößenverteilung und annähernd sphärischer Form erhältlich (nicht erfindungsgemäß). Dies ist ein Vorteil, denn kleinere Pigmente lassen sich homogener in einer Korrosionsschutzbeschichtung verteilen, die Gefahr einer lokalen Kornarmut in der Korrosionsschutzbeschichtung ist verringert und die Trockenschichtdicke der Korrosionsschutzbeschichtung wird vermindert.

In der erfindungsgemäßen Korrosionsschutzbeschichtung sowie in der Mischung zu ihrer Herstellung weisen vorzugsweise mindestens 50 % der Partikel des Korrosionsschutzpigments, bevorzugt mindestens 90 % der Partikel des Korrosionsschutzpigments eine größte Abmessung zwischen 1 und 100 $\mu$m auf, bevorzugt zwischen 10 und 20 $\mu$m, gemessen mittels Laserbeugung mit einem Coulter LS Partikelgrößenanalysator.

Die Partikel des Korrosionsschutzpigments haben in einer Richtung im Vergleich zu den anderen beiden Richtungen oder in zwei Richtungen eine im Vergleich zur dritten Richtung signifikant größere, bevorzugt um mindestens eine Größenordnung größere Ausdehnung. Beispiele für Partikel, die in zwei Richtungen eine im Vergleich zur dritten Richtung signifikant größere Ausdehnung aufweisen, sind blättchenförmige (lamellenförmige) Partikel.

Es wurde festgestellt, dass Pigmente aus einer Legierung bestehend aus 74 Gew.-% Zink und 26 Gew.-% Magnesium besonders gut als Korrosionsschutzpigment für Aluminiumsubstrate geeignet sind. Eine Legierung dieser Zusammensetzung enthält die intermetallische Phase MgZn.

Ein wesentlicher Vorteil des erfindungsgemäß einzusetzenden Korrosionsschutzpigments aus einer Legierung aus Zink und Magnesium mit einem Zinkgehalt von 90 Gew.-% oder weniger, bevorzugt 74 bis 84 Gew.-%, besonders bevorzugt 80 Gew.-% oder weniger, weiter bevorzugt 74 bis 80 Gew.-%, und insbesondere 74 Gew.-% gegenüber den aus dem Stand der Technik für den Korrosionsschutz von Aluminiumsubstraten bekannten Pigmenten aus Magnesium besteht darin, dass sich bei der Korrosion des Zinks Oxidationsprodukte bilden, die ein größeres Volumen einnehmen als das metallische Zink, während die Oxidationsprodukte des Magnesiums ein kleineres Volumen einnehmen als das metallische Magnesium. Aufgrund des hohen Zinkanteils der erfindungsgemäß einzusetzenden Korrosionsschutzpigmente werden voluminöse Korrosionsprodukte gebildet, so dass eine effiziente Barriereschicht erzeugt wird, d.h. in der Beschichtung werden die Leitungspfade für den Ionentransport blockiert. Mit den Zusammensetzungen nach der WO 2005/051551 A1 wird aufgrund der geringen Dichte des Leichtmetalls Magnesium und seiner Korrosionsprodukte eine solche Barrierewirkung nicht oder in nur geringem Umfang erreicht.

In der erfindungsgemäß zu verwendenden Korrosionsschutzbeschichtung liegen die Partikel des Korrosionsschutzpigments in einem ggf. ausgehärteten Bindemittel oder Bindemittelsystem verteilt vor. Unter "Aushärten des Bindemittels" wird das Überführen des ursprünglich schmelzbaren und plastisch verformbaren Bindemittels in einen harten und unschmelzbaren Zustand bezeichnet. Die Härtung wird meist durch Härter (Vernetzer) ausgelöst, die entweder eine als Kettenreaktion verlaufende Vernetzung der in den Harzen vorhandenen reaktiven Gruppen initiieren oder in stöchiometrischen Mengen mit reaktiven Gruppen des Harzes in Polyadditions- oder PolykondensationsReaktionen vernetzen. Die Härtung kann aber auch z.B. durch Luftfeuchtigkeit, Wärme (bei thermisch nachvernetzbaren Produkten) oder Strahlung erfolgen.

Der erfindungsgemäß zu verwendenden Mischung zur Herstellung der erfindungsgemäßen Korrosionsschutzbeschichtung wird ein als Bindemittel geeignetes polymeres Material (z.B. Polymer oder Copolymer) zugesetzt oder ein Prepolymer (z.B. Monomer oder Oligomer) bzw. eine Kombination von Prepolymeren, die durch Polymerisation oder Copolymerisation ein Polymer oder Copolymer bilden, oder ein anorganisches Bindemittel. Als Beispiel seien Polyurethane, Epoxide, Amine, Amide, Kieselsäureester, Silikonharze, Alkydharze, Polyester, Acrylate, Silicate, modifizierten Naturkautschuke, Kunststoffdispersionen, Phenole, Melamine, Polyvinylacetalen, und Polyvinylchloride genannt. Das Bindemittel kann auch ein Zweikomponenten-Bindemittelsystem umfassend ein Harz und einen Vernetzter (Härter) sein. Für den Korrosionsschutz von Aluminium wird bevorzugt Epoxidharz als Bindemittel eingesetzt. Besonders bevorzugt ist ein Bindemittelsystem umfassend ein Bisphenol A-Epoxidharz und ein Polyaminoamid-Härter. Diese reagieren beim Aushärten miteinander und bilden so ein Netzwerk aus, in welchem die Partikel des Korrosionsschutzpigments eingebettet sind. Diese erfindungsgemäß bevorzugte Variante wird üblicherweise als 2K (Zweikomponenten-)EP -Lack bezeichnet.

Als anorganische Bindemittel werden insbesondere mineralische Bindemittel eingesetzt, insbesondere solche ausgewählt aus der Gruppe der Silikate. Bei Verwendung mineralischer Bindemittel erfolgt nach der Applikation der Beschichtung üblicherweise eine Behandlung bei hohen Temperaturen, so dass das mineralische Bindemittel verfestigt wird. Derartige mineralische Bindemittel werden insbesondere für Beschichtungen verwendet, in denen plättchen- bzw. lamellenförmige Korrosionsschutzpigmente eingesetzt werden (Lamellenbeschichtungen).

Der massebezogene Anteil des festen Bindemittels oder Bindemittelsystems an der erfindungsgemäßen Korrosionsschutzbeschichtung beträgt 5 bis 20%, vorzugsweise 8 bis 9 %. Der massebezogene Anteil des Bindemittels oder Bindemittelsystems an der Mischung zur Herstellung der erfindungsgemäßen Korrosionsschutzbeschichtung beträgt 5 bis 50%, vorzugsweise 5 bis 20 %, besonders bevorzugt 7 bis 8 %.

Die erfindungsgemäß zu verwendende Mischung zur Herstellung einer erfindungsgemäßen Korrosionsschutzbeschichtung kann ein oder mehrere Lösungsmittel enthalten. Die erfindungsgemäße Mischung kann auch Lösungsmittelanteile enthalten, die mit dem Bindemittel eingebracht werden, sofern dieses in einem Lösungsmittel gelöst ist. Die folgenden Angaben beziehen sich auf alle in der Mischung vorhandenen Lösungsmittel, unabhängig davon, ob sie mit dem Bindemittel oder unabhängig von dem Bindemittel in die Mischung eingebracht werden. Die Lösungsmittel für die erfindungsgemäße Mischung zur Herstellung einer Korrosionsschutzbeschichtung müssen sorgsam ausgewählt werden, da sie nicht nur rein verarbeitungstechnische Eigenschaften, wie Verlauf, An- und Durchtrocknung beeinflussen, sondern auch die Chemikalienbeständigkeit der Beschichtung und die Topfzeit der Mischung. Ketone und Ester können mit aminofunktionellen Härtern Addukte bilden und so die Topfzeit verlängern, während andererseits die Topfzeit durch Alkohole verkürzt wird.

Es kann eine Kombination aus echten und latenten Lösungsmitteln eingesetzt werden. Während ein echtes Lösungsmittel allein in der Lage ist, den gewünschten Stoff, d.h. im vorliegenden Fall das Bindemittel bzw. Bindemittelsystem zu lösen, ist ein latentes Lösungsmittel nur in einer Mischung mit mindestens einem echten Lösungsmittel in der Lage, den gewünschten Stoff zu lösen. Vorzugsweise umfassen die in der erfindungsgemäßen Mischung enthaltenen Lösungsmittel echte Lösungsmittel, z.B. Methoxypropylacetat und/oder Methylethylketon und/oder Ethylacetat und latente Lösungsmittel z.B. Butylacetat und/oder Methylisobutylketon und/oder Xylol und/oder Aceton.

Eine insbesondere für das o.g. erfindungsgemäß bevorzugte Bindemittelsystem umfassend ein Bisphenol A-Epoxidharz und einen Polyaminoamid-Härter bevorzugt eingesetzte Kombination von Lösungsmitteln umfasst Methoxypropylacetat und Methylethylketon als echte Lösungsmittel sowie Butylacetat als latentes Lösungsmittel. Methoxypropylacetat stellt durch seine hohe Verdunstungszahl sicher, dass ein echtes Lösungsmittel den Film als letztes verlässt.

Die erfindungsgemäß zu verwendende Mischung liegt in Form einer Dispersion oder Suspension vor. Durch den Zusatz eines oder mehrerer Lösungsmittel wird die Viskosität der Mischung bevorzugt so eingestellt, dass eine Verarbeitung mit den in der Lackiertechnik angewandten Verfahren, wie z.B. Spritzlackierung, Rollen, Streichen, Tauchverfahren etc. ermöglicht wird. Der massebezogene Anteil des bzw. der Lösungsmittel an der Mischung zur Herstellung der erfindungsgemäßen Korrosionsschutzbeschichtung ergibt sich aus dem Verarbeitungsverfahren und beträgt bei Spritzlackierung 5 bis 15 %, vorzugsweise 10 bis 11 %.

Eine erfindungsgemäß zu verwendende Korrosionsschutzbeschichtung und dementsprechend die Mischung zu ihrer Herstellung kann ggf. weitere partikelförmige Feststoffe enthalten, beispielsweise Füllstoffe und andere Additive.

Solche Additive umfassen beispielsweise Thixotropierungsmittel, Entwässerungsmittel und Füllstoffe. Thixotropierungsmittel sind empfehlenswert, um ein Absetzen der Pigmente zu verhindern. Bevorzugt sind die Thixotropierungsmittel ausgewählt aus der Gruppe bestehend aus pyrogenen Kieselsäuren, Schichtsilikaten, hydrierten Rizinusölen, Cellulosederivaten und Polyacrylaten. Entwässerungsmittel unterbinden die Reaktion des Pigmentes mit Wasser, die zur Auflösung des Pigments unter Entwicklung von Wasserstoff führt. Bevorzugt sind die Entwässerungsmittel ausgewählt aus der Gruppe bestehend aus Zeolithen und Isocyanaten.

Bevorzugt enthält die erfindungsgemäß zu verwendende Korrosionsschutzbeschichtung sowie die Mischung zu ihrer Herstellung ein oder mehrere Thixotropierungsmittel ausgewählt aus der Gruppe der pyrogenen Kieselsäuren, z.B. Aerosil R 972 und/oder ein oder mehrere Entwässerungsmittel ausgewählt aus der Gruppe der als Molekularsiebe wirksamen Zeolithen, z.B. Sylosiv A 300.

In der erfindungsgemäß zu verwendende Korrosionsschutzbeschichtung ist die Pigmentvolumenkonzentration so eingestellt, dass sie 90 bis 110 % der zum Erreichen der Perkolationsschwelle nötigen Pigmentvolumenkonzentration beträgt.

Wird ein Korrosionsschutzpigment eingesetzt, dessen Partikel sphärisch sind, dann beträgt die Pigmentvolumenkonzentration in der Korrosionsschutzbeschichtung vorzugsweise 90 bis 110 % der kritischen Pigmentvolumenkonzentration.

Gemäß ISO 4681/1 ist die Pigmentvolumenkonzentration (PKV) eines Erzeugnisses das Verhältnis des Volumens der enthaltenen Pigmente und anderer partikelförmiger Feststoffe (im folgenden Füllstoffe genannt) zum Gesamtvolumen an nichtflüchtigen Bestandteilen (Pigmente, Füllstoffen und Bindemittel):

$$PVK[\%] = \frac{\sum V_{Pigmente} + \sum V_{Füllstoffe}}{\sum V_{Pigmente} + \sum V_{Füllstoffe} + \sum V_{Bindemittel}} \cdot 100$$

Unter "Perkolationsschwelle wird diejenige Pigmentvolumenkonzentration verstanden, bei der die Anzahl der Pigmentpartikel gerade groß genug ist, um unter Standardbedingungen (25 °C, 101,325 kPa) elektronisch leitfähige Kontakte zwischen den Partikeln herzustellen und so durchgehende elektronische Leitungspfade bilden. Wenn in einer Beschichtung die Perkolationsschwelle erreicht ist, ändern sich bestimmte Eigenschaften wie die elektronische Leitfähigkeit also schlagartig. Aufgrund dieses schlagartigen Anstiegs der Leitfähigkeit kann ermittelt werden, bei welcher Pigmentvolumenkonzentration die Perkolationsschwelle erreicht wird, Dieser Wert ist abhängig von der Partikelgröße, Partikelgrößenverteilung, Partikelform und der chemischen Natur der eingesetzten Pigmente und sonstigen Feststoffteilchen.

Bei annähernd kugelförmigen Pigmentpartikeln entspricht die Perkolationsschwelle der kritischen Pigmentvolumenkonzentration. Die kritische Pigmentvolumenkonzentration (KPKV) ist gemäß ISO-4681/1 der Wert der Pigmentvolumenkonzentration, bei dem sich die Feststoffteilchen gegenseitig berühren, und die Zwischenräume zwischen den sich berührenden Feststoffteilchen gerade mit Bindemittel gefüllt sind.

Die kritische Pigmentvolumenkonzentration kann durch Bestimmung der Ölzahl des eingesetzten Pigments bzw. der eingesetzten Mischung aus Pigmenten und Füllstoffen ermittelt werden (DIN ISO 787 Teil 5). Nach DIN ISO 787, Teil 5 versteht man unter der Ölzahl diejenige Menge an tropfenweise zugegebenem Lackleinöl, die eine bestimmte Menge Pigment oder Füllstoff beim Kneten mit einem Spatel bis zum Erreichen einer zusammenhängenden, kittartigsteifen Paste absorbiert ("Netzpunkt"). Im Allgemeinen wird die Ölzahl in g(Leinöl) pro 100 g Pigment bzw. Füllstoff angegeben. Sie wird bestimmt, indem man eine zu einer bestimmten Menge Pigment, je nach zu erwartender Ölzahl (bei hoher zu erwartender Ölzahl weniger Pigment), tropfenweise Lackleinöl zugibt und gut einarbeitet. Der Endpunkt ist erreicht, wenn nach eine zusammenhängende Paste, die noch nicht schmiert, entstanden ist. Um von der Ölzahl auf die kritische Pigmentvolumenkonzentration zu schließen, gilt folgende Formel:

$$KPVK = \frac{100}{\left(1 + \frac{\rho_{pigment} \cdot \ddot{O}Z}{\rho_{lein\ddot{o}l} \cdot 100}\right)}$$

Ein entscheidendes Kriterium zur Charakterisierung von Beschichtungen ist das Verhältnis der jeweiligen Pigmentvolumenkonzentration zur kritischen Pigmentvolumenkonzentration (Q-Wert):

$$Q = ([PKV]/[KPVK]) * 100 \%$$

Der Q-Wert gibt an, wie nahe die tatsächliche Pigmentvolumenkonzentration der kritischen Pigmentvolumenkonzentration kommt.

Während bei kugelförmigen Pigmenten (nicht erfindungsgemäß) bei der kritischen Pigmentvolumenkonzentration gleichzeitig auch die Perkolationsschwelle erreicht wird, kann bei Partikeln, die in einer Richtung eine im Vergleich zu anderen Richtungen signifikant größere Ausdehnung haben, z.B. lamellenförmigen Partikeln, die Perkolationsschwelle weit unter der kritischen Pigmentvolumenkonzentration liegen.

Für die Funktion der erfindungsgemäßen Korrosionsschutzbeschichtung ist es erforderlich, dass da die Partikel des Korrosionsschutzpigments einander berühren und so durchgehende elektronische Leitungspfade bilden. Dies ist gegeben, wenn Perkolationsschwelle annähernd erreicht ist. Um dies zu erreichen, wird die Pigmentvolumenkonzentration PKV der erfindungsgemäßen Korrosionsschutzbeschichtung bevorzugt auf 30 bis 82,5 Vol.-% eingestellt.

Insbesondere bei Korrosionsschutzpigmenten mit annähernd kugelförmigen Partikeln (nicht erfindungsgemäß) wird die Pigmentvolumenkonzentration PKV der erfindungsgemäßen Korrosionsschutzbeschichtung bevorzugt so gewählt, dass sie im Bereich von 90 bis 110 % der kritischen Pigmentvolumenkonzentration beträgt. Dies ist typischerweise bei Pigmentvolumenkonzentrationen von 67,5 bis 82,5 Vol.-% der Fall.

Dabei ist zu beachten, dass in die Berechnung der Pigmentvolumenkonzentration PKV auch das Volumen solcher partikelförmiger Feststoffe eingeht, die keine Pigmente sind (in diesem Zusammenhang als Füllstoffe bezeichnet). Diese partikelförmigen Feststoffe sind üblicherweise nicht elektronisch leitfähig. Bei einem zu hohen Anteil an elektronisch nicht leitfähigen Feststoffpartikeln könnten diese den Kontakt zwischen den elektronisch leitfähigen Partikeln des Korrosionsschutzpigments blockieren, so dass die Beschichtung trotz Erreichen der oben definierten kritischen Pigmentvolumenkonzentration nicht elektronisch leitfähig wird. Um dies zu verhindern, beträgt in der erfindungsgemäß zu verwendenden Korrosionsschutzbeschichtung der volumenbezogene Anteil der Partikel des Korrosionsschutzpigments an der Gesamtheit der in der Korrosionsschutzbeschichtung vorhandenen Feststoffpartikel 70 % oder mehr, bevorzugt 80 % oder mehr, weiter bevorzugt 90 % oder mehr, und besonders bevorzugt 95 % oder mehr.

Entsprechendes gilt für die Mischung zur Herstellung der erfindungsgemäßen Korrosionsschutzbeschichtung. Da für die Berechnung der Pigmentvolumenkonzentration nur die nichtflüchtigen Bestandteile eines Erzeugnisses zu berücksichtigen sind, bleiben ggf. der Mischung zugesetzte Lösungsmittel außer Betracht, und die Pigmentvolumenkonzentration berechnet sich für die erfindungsgemäße Mischung ebenso wie für die erfindungsgemäße Korrosionsschutzbeschichtung.

Zur Herstellung der erfindungsgemäßen Mischung werden die Pigmentpartikel mit dem Bindemittel bzw. Bindemittelsystem sowie ggf. weiteren Mischungsbestandteilen wie Additiven in Form partikelförmiger Feststoffe und/oder Lösungsmitteln mittels dem Fachmann bekannter Verfahren miteinander vermischt (z.B. durch Dispergieren mittels eines Dissolvers oder ähnlicher Rühraggregate), so dass eine homogene Dispersion entsteht.

Die vorliegende Erfindung betrifft weiterhin ein Verfahren zur Herstellung einer Korrosionsschutzbeschichtung auf einer Metalloberfläche, insbesondere auf einer Oberfläche eines Metalls ausgewählt aus der Gruppe bestehend aus Aluminium, Aluminiumlegierungen, umfassend die Schritte

- Aufbringen einer erfindungsgemäßen Mischung zur Herstellung einer Korrosionsschutzbeschichtung auf zumindest einen Teil der Metalloberfläche,
- ggf. Aushärtenlassen des Bindemittels.

Soweit erforderlich, werden die zu beschichtenden Metalloberflächen vor dem Aufbringen der erfindungsgemäßen Korrosionsschutzbeschichtung mit einem geeigneten Lösungsmittel, z.B. Butylacetat, entfettet. Anschließend können die zu beschichtenden Oberflächen gebeizt werden, dies ist insbesondere für Luftfahrtanwendungen üblich. Typischerweise umfasst das Beizen einen ersten Beizschritt, in welchem die zu beschichtende Oberfläche mit Lauge, z.B. 4 mol/l Natronlauge behandelt wird, und einen zweiten Beizschritt, in welchem die die zu beschichtende Oberfläche mit Säure, z.B. mit ca. 20 Gew.-% Salpetersäurelösung behandelt wird. Nach jedem Beizschritt erfolgt eine Spülung mit Wasser. Nach dem Abspülen des zuletzt angewendeten Beizmittels kann eine Trocknung bei erhöhter Temperatur, beispielsweise 65 °C, erfolgen.

Das Aufbringen der erfindungsgemäßen Mischung, die in Form einer Dispersion oder Suspension vorliegt, auf die zu beschichtende Oberfläche erfolgt vorzugsweise mittels in der Lackiertechnik angewandter Verfahren, wie z.B. Spritzlackierung, Rollen, Streichen, oder mit anderen Standardverfahren wie Walzen oder Tauchen etc. Die Trockenschichtdicke der Korrosionsschutzbeschichtung beträgt 100 $\mu$m oder weniger, bevorzugt 80 $\mu$m oder weniger, besonders bevorzugt 10 bis 20 $\mu$m. Sofern erforderlich, kann anschließend eine Härtung des Bindemittels mittels üblicher Verfahren erfolgen.

Die Erfindung betrifft ferner einen Gegenstand umfassend

- einen Grundkörper aus Metall oder umfassend Bereiche aus Metall ausgewählt aus der Gruppe bestehend aus Aluminium, Aluminiumlegierungen, und

- eine auf dem aus Metall ausgewählt aus Aluminium und Aluminiumlegierungen bestehenden Grundkörper bzw. den metallischen Bereichen des Grundkörpers angeordnete erfindungsgemäße Korrosionsschutzbeschichtung.

Unter Grundkörper wird der Gegenstand abzüglich der erfindungsgemäß zu verwendenden Korrosionsschutzbeschichtung verstanden. Dieser Grundkörper besteht aus Metall ausgewählt aus der Gruppe bestehend aus Aluminium, Aluminiumlegierungen, oder er enthält Bereiche, die aus Metall ausgewählt aus der Gruppe bestehend aus Aluminium und Aluminiumlegierungen bestehen. Auf dem aus Metall bestehenden Grundkörper bzw. auf den aus Metall bestehenden Bereichen des Grundkörpers ist die erfindungsgemäße Korrosionsschutzbeschichtung angeordnet, so dass sie den aus Metall ausgewählt aus der Gruppe bestehend aus Aluminium und Aluminiumlegierungen bestehenden Grundkörper bzw. die metallischen (ausgewählt aus der Gruppe bestehend aus Aluminium und Aluminiumlegierungen) Bereiche des Grundkörpers zumindest teilweise bedeckt. Die Trockenschichtdicke der Korrosionsschutzbeschichtung beträgt 100 $\mu$m oder weniger, bevorzugt 80 $\mu$m oder weniger, besonders bevorzugt 10 bis 20 $\mu$m. Über der Korrosionsschutzbeschichtung können eine oder mehrere Deckschichten angeordnet sein, insbesondere Schicht(en), die eine mechanische Beschädigung des Substrats und der Korrosionsschutzbeschichtung verhindern können. Um einen effektiven kathodischen Korrosionsschutz zu gewährleisten, ist die erfindungsgemäße Korrosionsschutzbeschichtung bevorzugt so auszuwählen, dass das Potential und der erfindungsgemäßen Korrosionsschutzbeschichtung mindestens 50 mV unterhalb des Potentials des metallischen Grundkörpers liegt, besonders bevorzugt mindestens 300 mV unterhalb des Potentials des Grundkörpers. Dabei ist zu beachten, dass sowohl das Ruhepotential des Substrats als auch das Ruhepotential der Korrosionsschutzbeschichtung, und demzufolge auch die Potentialdifferenz zwischen beiden, vom umgebenden Elektrolyt abhängen.

Ausführungsbeispiele

Die Korrosionsbeständigkeit wird mittels Auslagerung im Salzsprühnebeltest nach DIN EN ISO 9227 untersucht. Dabei kann die Korrosionsbeständigkeit durch visuelle Beurteilung von Blasenbildung, Haftungsverlust, Korrosionslöchern und Ähnlichem bestimmt werden.

Ausführungsbeispiel 1: Herstellung und Charakterisierung einer Korrosionsschutzgrundierung mit Zink-Magnesium-Legierungspigmenten der Zusammensetzung 74 Gew.-% Zn und 26 Gew.-% Mg auf einem Substrat aus der Legierung AA 2024

Die Zusammensetzung der Mischung zur Herstellung der Korrosionsschutzbeschichtung ist wie folgt:

| Position | Produkt | Funktion | Masse / g |
|---|---|---|---|
| 1 | Epoxid-Harz Beckopox EP 301/75X | Bindemittel | 10,0 |
| 2 | Methoxypropylacetat | Lösungsmittel | 4,0 |
| 3 | Methylethylketon | Lösungsmittel | 2,0 |
| 4 | Pyrogene Kieselsäure Aerosil R 972 | Thixotropierungsmittel | 1,0 |
| 5 | Zeolith Sylosiv A300 | Entwässerungsmittel | 0,5 |
| 6 | Butylacetat | Lösungsmittel | 3,0 |
| 7 | Pigment aus MgZn-Legierung (74 Gew.-%Zn/ 26% Gew.-%Mg) | Korrosionsschutzpigment | 92,4 |
| 8 | Polyamidoamin Ancamide 2353 | Härter | 1,8 |
| 9 | Butylacetat | Lösungsmittel | 10 |

Es wurde eine PVK von 75 % eingestellt. Die experimentell über die Ölzahl ermittelte KPVK beträgt 75 %.

Die Herstellung erfolgte mit Hilfe des Speedmixers™ DAC 800 FVZ der Firma Hauschild Engineering. Die Positionen 1 bis 7 wurden 6 Minuten lang bei 1800 U/min dispergiert, so dass ein Grindometerwert < 10 $\mu$m resultierte. Vor der Applikation wurde Position 8 zugegeben und mit Position 9 auf Spritzviskosität eingestellt.

Die Proben wurden vor der Applikation mit Natronlauge und Salpetersäure gebeizt. Die Korrosionsschutzbeschichtung wurde mittels pneumatischer Spritzapplikation appliziert. Die Trockenschichtdicke der Korrosionsschutzbeschichtung betrug 80 $\mu$m.

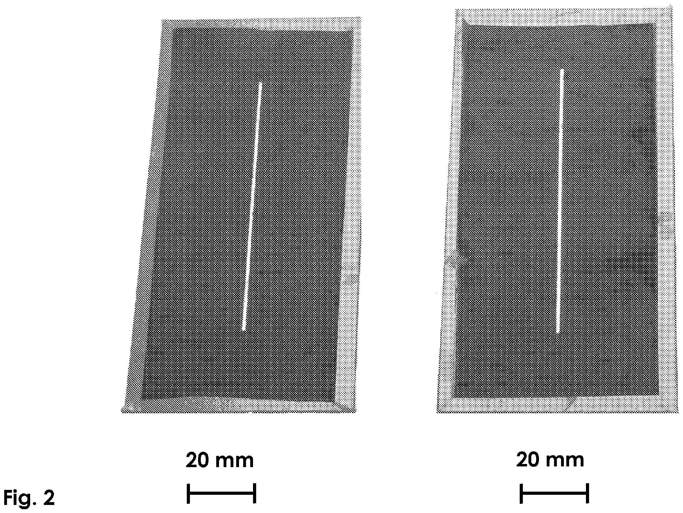

Die Proben wurden im Salzsprühnebeltest ausgelagert. Vor der Auslagerung wurde mittels einer Fräse ein 10 cm langer und 1 mm breiter Ritz durch die Beschichtung bis zum Substrat erzeugt. Die Beurteilung der Proben erfolgte jeweils alle 200 Stunden bis hin zu 10000 Stunden. Figur 2 zeigt eine Probe nach 3000 Stunden Salzsprühnebeltest (links) und 10000 Stunden (rechts). Nach 10000 Stunden Auslagerung im Salzsprühnebeltest treten weder Blasen noch Korrosion auf der Fläche noch im Ritz auf.

Ausführungsbeispiel 2: Herstellung und Charakterisierung einer Korrosionsschutzgrundierung mit Zink-Magnesium-Legierungspigmenten der Zusammensetzung 80% Zn und 20% Mg auf einem Substrat aus der Legierung AA 2024

Die Zusammensetzung der Mischung zur Herstellung der Korrosionsschutzbeschichtung ist wie folgt:

| Position | Produkt | Funktion | Masse / g |
|---|---|---|---|
| 1 | Epoxid-Harz Beckopox EP 301/75X | Bindemittel | 10,0 |
| 2 | Methoxypropylacetat | Lösungsmittel | 4,0 |
| 3 | Methylethylketon | Lösungsmittel | 2,0 |
| 4 | Pyrogene Kieselsäure Aerosil R 972 | Thixotropierungsmittel | 1,0 |
| 5 | Zeolith Sylosiv A300 | Entwässerungsmittel | 0,5 |
| 6 | Butylacetat | Lösungsmittel | 3,0 |
| 7 | Pigment aus MgZn-Legierung (80 Gew.-%Zn/ 20% Gew.-%Mg) | Korrosionsschutzpigment | 100,3 |
| 8 | Polyamidoamin Ancamide 2353 | Härter | 1,8 |
| 9 | Butylacetat | Lösungsmittel | 12 |

Es wurde eine PVK von 74 % eingestellt. Die experimentell über die Ölzahl ermittelte KPVK beträgt 74 %

Die Herstellung erfolgte mit Hilfe des Speedmixers™ DAC 800 FVZ der Firma Hauschild Engineering. Die Positionen 1 bis 7 wurden 6 Minuten lang bei 1800 U/min dispergiert, so dass ein Grindometerwert < 10 μm resultierte. Vor der Applikation wurde Position 8 zugegeben und mit Position 9 auf Spritzviskosität eingestellt.

Die Proben wurden vor der Applikation mit Natronlauge und Salpetersäure gebeizt. Die Korrosionsschutzbeschichtung wurde mittels pneumatischer Spritzapplikation appliziert. Die Trockenschichtdicke der Korrosionsschutzbeschichtung betrug 80 μm.

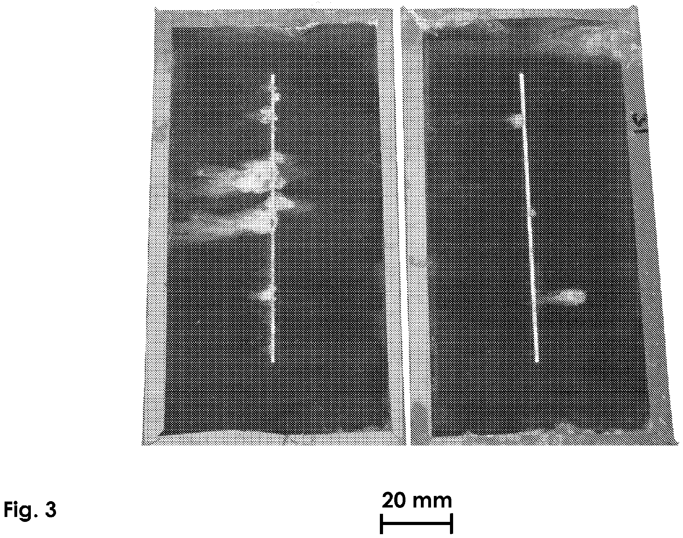

Die Proben wurden im Salzsprühnebeltest ausgelagert. Vor der Auslagerung wurde mittels einer Fräse ein 10 cm langer und 1 mm breiter Ritz durch die Beschichtung bis zum Substrat erzeugt. Die Beurteilung der Proben erfolgte jeweils alle 200 Stunden. Figur 3 zeigt Proben nach 3000 Stunden Salzsprühnebeltest. Bereits nach 800 Stunden Salzsprühnebeltest zeigten sich erste Korrosionsprodukte auf der Oberfläche.

Ausführungsbeispiel 3: Herstellung und Charakterisierung einer Korrosionsschutzgrundierung mit Zink-Magnesium-Legierungspigmenten der Zusammensetzung 74 Gew.-% Zn und 26 Gew.-% Mg auf einem Substrat aus der Legierung AA 5754

Die Zusammensetzung der Mischung zur Herstellung der Korrosionsschutzbeschichtung ist wie folgt:

| Position | Produkt | Funktion | Masse / g |
|---|---|---|---|
| 1 | Epoxid-Harz Beckopox EP 301/75X | Bindemittel | 10,0 |
| 2 | Methoxypropylacetat | Lösungsmittel | 4,0 |
| 3 | Methylethylketon | Lösungsmittel | 2,0 |
| 4 | Pyrogene Kieselsäure Aerosil R 972 | Thixotropierungsmittel | 1,0 |
| 5 | Zeolith Sylosiv A300 | Entwässerungsmittel | 0,5 |
| 6 | Butylacetat | Lösungsmittel | 3,0 |
| 7 | Pigment aus MgZn-Legierung (74 Gew.-%Zn/ 26% Gew.-%Mg) | Korrosionsschutzpigment | 92,4 |
| 8 | Polyamidoamin Ancamide 2353 | Härter | 1,8 |
| 9 | Butylacetat | Lösungsmittel | 10 |

Es wurde eine PVK von 75 %. Die experimentell über die Ölzahl ermittelte KPVK beträgt 75 %.

Die Herstellung erfolgte mit Hilfe des Speedmixers™ DAC 800 FVZ der Firma Hauschild Engineering. Die Positionen 1 bis 7 wurden 6 Minuten lang bei 1800 U/min dispergiert so dass ein Grindometerwert < 10 μm resultierte. Vor der Applikation wurde Position 8 zugegeben und mit Position 9 auf Spritzviskosität eingestellt.

Die Proben wurden vor der Applikation mit Natronlauge und Salpetersäure gebeizt. Die Korrosionsschutzbeschichtung wurde mittels pneumatischer Spritzapplikation appliziert. Die Trockenschichtdicke der Korrosionsschutzbeschichtung betrug 80 μm.

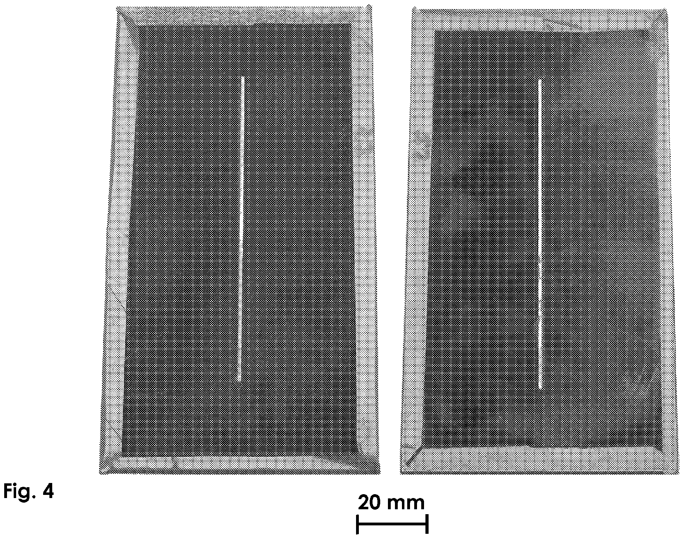

Die Proben wurden im Salzsprühnebeltest ausgelagert. Vor der Auslagerung wurde mittels einer Fräse ein 10 cm langer und 1 mm breiter Ritz durch die Beschichtung bis zum Substrat erzeugt. Die Beurteilung der Proben erfolgte jeweils alle 200 Stunden bis hin zu 10000 Stunden. Figur 4 zeigt die Proben nach 10000 Stunden Salzsprühnebeltest. Nach 10000 Stunden Auslagerung im Salzsprühnebeltest treten weder Blasen noch Korrosion auf der Fläche noch im Ritz auf.

Vergleichsbeispiel 1: Herstellung und Charakterisierung einer

Korrosionsschutzgrundierung mit Zinkpigmenten auf einem Substrat aus der Legierung AA 2024

Die Zusammensetzung der Mischung zur Herstellung der Korrosionsschutzbeschichtung ist wie folgt:

| Position | Produkt | Funktion | Masse / g |
|---|---|---|---|
| 1 | Epoxidharz Beckopox EP 301/75X | Bindemittel | 10,0 |
| 2 | Methoxypropylacetat | Lösungsmittel | 4,0 |
| 3 | Methylethylketon | Lösungsmittel | 2,0 |
| 4 | Aerosil R 972 | Thixotropierungsmittel | 1,0 |
| 5 | Sylosiv A300 | Entwässeru ngsmittel | 0,5 |
| 6 | Butylacetat | Lösungsmittel | 3,0 |
| 7 | Zink | Korrosionsschutzpigment | 111,2 |
| 8 | Polyamidoamin Ancamide 2353 | Härter | 1,8 |
| 3 | Butylacetat | Lösungsmittel | 15 |

Es wurde eine PVK von 66 eingestellt. Die experimentell über die Ölzahl ermittelte KPVK beträgt 66 %.

Die Herstellung erfolgte mit Hilfe des Speedmixers™ DAC 800 FVZ der Firma Hauschild Engineering. Die Positionen 1 bis 7 wurden 6 Minuten lang bei 1800 U/min dispergiert, so dass ein Grindometerwert < 10 μm resultierte. Vor der Applikation wurde Position 8 zugegeben und mit Position 9 auf Spritzviskosität eingestellt.

Die Proben wurden vor der Applikation mit Natronlauge und Salpetersäure gebeizt. Die Korrosionsschutzbeschichtung wurde mittels pneumatischer Spritzapplikation appliziert. Die Trockenschichtdicke der Korrosionsschutzbeschichtung betrug 80 μm.

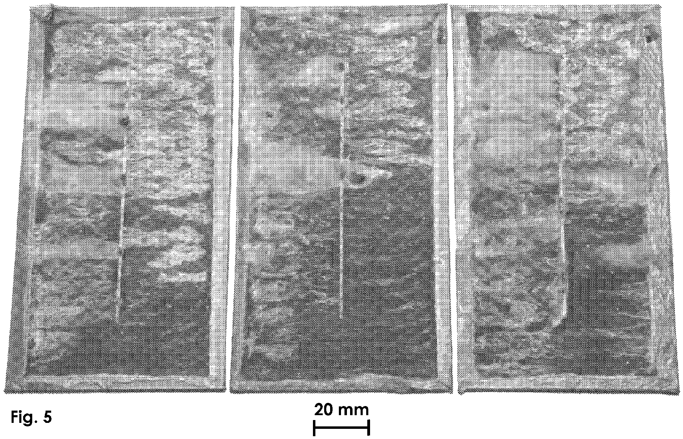

Die Proben wurden im Salzsprühnebeltest ausgelagert. Vor der Auslagerung wurde mittels einer Fräse ein 10 cm langer und 1 mm breiter Ritz durch die Beschichtung bis zum Substrat erzeugt. Die Beurteilung der Proben erfolgte jeweils alle 200 Stunden. Figur 5 zeigt die Proben nach 3000 Stunden Salzsprühnebeltest. Bereits nach 400 Stunden Salzsprühnebeltest zeigen sich erste Korrosionsprodukte auf der Fläche, und im Ritz treten Korrosionslöcher auf.

Ausführungsbeispiel 4: Herstellung und Charakterisierung einer Korrosionsschutzgrundierung mit Zink-Magnesium-Legierungspigmenten der Zusammensetzung 74 Gew.-% Zn und 26 Gew.-% Mg auf einem Substrat aus nicht legiertem Stahl 1.0347)

Die Zusammensetzung der Mischung zur Herstellung der Korrosionsschutzbeschichtung ist wie folgt:

| Position | Produkt | Funktion | Masse / g |
|---|---|---|---|
| 1 | Epoxid-Harz Beckopox EP 140 | Bindemittel | 7,4 |
| 2 | Methoxypropylacetat | Lösungsmittel | 2,0 |
| 3 | Pyrogene Kieselsäure Aerosil R 972 | Thixotropierungsmittel | 0,5 |
| 4 | Pigment aus MgZn-Legierung (74 Gew.-%Zn/ 26% Gew.-%Mg) | Korrosionsschutzpigment | 85,8 |
| 5 | Polypox R3 | Reaktivverdünner | 3,0 |
| 6 | Polyamidoamin Beckopox EH 633 | Härter | 3,0 |

Es wurde eine PVK von 69 % eingestellt. Die experimentell über die Ölzahl ermittelte KPVK beträgt für diese Pigmentzusammensetzung und Partikelgrößenverteilung 69 %.

Die Herstellung erfolgte mit Hilfe des Speedmixers™ DAC 800 FVZ der Firma Hauschild Engineering. Die Positionen 1 bis 4 wurden 6 Minuten lang bei 1800 U/min dispergiert, so dass ein Grindometerwert < 10 μm resultierte. Vor der Applikation wurden die Positionen 5 und 6 zugegeben. Die Proben wurden vor der Applikation mit Aceton gereinigt. Die Korrosionsschutzbeschichtung wurde mittels Spin coater appliziert. Die Trockenschichtdicke der Korrosionsschutzbeschichtung betrug 50 μm.

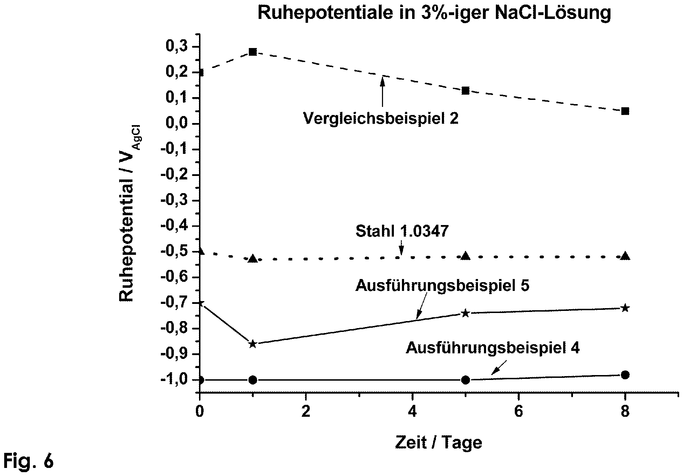

Figur 6 zeigt die Ruhepotentiale der Probe aus Ausführungsbeispiel 4 in wässriger Natriumchlorid-Lösung (3 Gew.-% NaCl) im Vergleich zu denen des unbeschichteten Substrates aus nicht legiertem Stahl 1.0347 als Funktion der Zeit. Die Potentialdifferenz zwischen der Beschichtung gemäß Ausführungsbeispiel 4 und dem Substrat aus nicht legiertem Stahl 1.0347 beträgt ca. 500 mV. Dadurch wird ein kathodischer Schutz gewährleistet.

Ausführungsbeispiel 5: Herstellung und Charakterisierung einer Korrosionsschutzgrundierung mit Zink-Magnesium-Legierungspigmenten der Zusammensetzung 84 Gew.-% Zn und 16 Gew.-% Mg auf einem Substrat aus nicht legiertem Stahl 1.0347

Die Zusammensetzung der Mischung zur Herstellung der Korrosionsschutzbeschichtung ist wie folgt:

| Position | Produkt | Funktion | Masse / g |
|---|---|---|---|
| 1 | Epoxid-Harz Beckopox EP 140 | Bindemittel | 7,4 |
| 2 | Methoxypropylacetat | Lösungsmittel | 2,0 |
| 3 | Pyrogene Kieselsäure Aerosil R 972 | Thixotropierungsmittel | 0,5 |
| 4 | Pigment aus MgZn-Legierung (84 Gew.-%Zn/ 16% Gew.-%Mg) | Korrosionsschutzpigment | 84,0 |
| 5 | Polypox R3 | Reaktivverdünner | 3,0 |
| 6 | Polyamidoamin Beckopox EH 633 | Härter | 3,0 |

Es wurde eine PVK von 66 % eingestellt. Die experimentell über die Ölzahl ermittelte KPVK beträgt für diese Pigmentzusammensetzung und Partikelgrößenverteilung 66 %. Die Herstellung erfolgte mit Hilfe des Speedmixers™ DAC 800 FVZ der Firma Hauschild Engineering. Die Positionen 1 bis 4 wurden 6 Minuten lang bei 1800 U/min dispergiert, so dass ein Grindometerwert < 10 μm resultierte. Vor der Applikation wurden die Positionen 5 und 6 zugegeben. Die Proben wurden vor der Applikation mit Aceton gereinigt. Die Korrosionsschutzbeschichtung wurde mittels Spin coater appliziert. Die Trockenschichtdicke der Korrosionsschutzbeschichtung betrug 50 μm.

Figur 6 zeigt die Ruhepotentiale der Probe aus Ausführungsbeispiel 5 in wässriger Natriumchlorid-Lösung (3 Gew.-% NaCl) im Vergleich zu denen des unbeschichteten Substrates aus nicht legiertem Stahl 1.0347 als Funktion der Zeit. Die Potentialdifferenz zwischen der Beschichtung gemäß Ausführungsbeispiel 5 und dem Substrat aus nicht legiertem Stahl 1.0347 gewährleistet eine kathodische Schutzwirkung. Daher kann durch eine erfindungsgemäße Beschichtung gemäß Ausführungsbeispiel 5 ein guter Korrosionsschutz erreicht werden.

Vergleichsbeispiel 2: Herstellung und Charakterisierung einer

Korrosionsschutzgrundierung ohne Korrosionsschutzpigmente auf einem Substrat aus nicht legiertem Stahl 1.0347

Die Zusammensetzung der Mischung zur Herstellung der Korrosionsschutzbeschichtung ist wie folgt:

| Position | Produkt | Funktion | Masse / g |
|---|---|---|---|
| 1 | Epoxid-Harz Beckopox EP 140 | Bindemittel | 7,4 |
| 2 | Methoxypropylacetat | Lösungsmittel | 2,0 |
| 3 | Pyrogene Kieselsäure Aerosil R 972 | Thixotropierungsmittel | 0,5 |
| 4 | Polypox R3 | Reaktivverdünner | 3,0 |
| 5 | Polyamidoamin Beckopox EH 633 | Härter | 3,0 |

Die Herstellung erfolgte mit Hilfe des Speedmixers™ DAC 800 FVZ der Firma Hauschild Engineering. Die Positionen 1 bis 3 wurden 6 Minuten lang bei 1800 U/min dispergiert, so dass ein Grindometerwert < 10 μm resultierte.

Vor der Applikation wurden die Positionen 4 und 5 zugegeben. Die Proben wurden vor der Applikation mit Aceton gereinigt. Die Korrosionsschutzbeschichtung wurde mittels Spin coater appliziert. Die Trockenschichtdicke der Korrosionsschutzbeschichtung betrug 50 $\mu$m.

Figur 6 zeigt die Ruhepotentiale der Probe aus Vergleichsbeispiel 2 in wässriger Natriumchlorid-Lösung (3 Gew.-% NaCl) im Vergleich zu denen des unbeschichteten Substrates aus nicht legiertem Stahl 1.0347 als Funktion der Zeit. Die mit einer Beschichtung, die keine Korrosionsschutzpigmente enthält, versehene Probe des Vergleichsbeispiels 2 zeigt ein deutlich höheres Ruhepotential als das Substrat aus nicht legiertem Stahl 1.0347. Es kann keine kathodische Schutzwirkung erreicht werden.

Ausführungsbeispiel 6: Herstellung und Charakterisierung einer Korrosionsschutzgrundierung mit Zink-Magnesium-Legierungspigmenten der Zusammensetzung 74 Gew.-% Zn und 26 Gew.-% Mg auf einem Substrat aus verzinktem Stahl 1.0347.

Die Zusammensetzung der Mischung zur Herstellung der Korrosionsschutzbeschichtung ist wie folgt:

| Position | Produkt | Funktion | Masse / g |
|---|---|---|---|
| 1 | Epoxid-Harz Beckopox EP 140 | Bindemittel | 7,4 |
| 2 | Methoxypropylacetat | Lösungsmittel | 2,0 |
| 3 | Pyrogene Kieselsäure Aerosil R 972 | Thixotropierungsmittel | 0,5 |
| 4 | Pigment aus MgZn-Legierung (74 Gew.-%Zn/ 26% Gew.-%Mg) | Korrosionsschutzpigment | 85,8 |
| 5 | Polypox R3 | Reaktivverdünner | 3,0 |
| 6 | Polyamidoamin Beckopox EH 633 | Härter | 3,0 |

Es wurde eine PVK von 69 % eingestellt. Die experimentell über die Ölzahl ermittelte KPVK beträgt für diese Pigmentzusammensetzung und Partikelgrößenverteilung 69 %.

Die Herstellung erfolgte mit Hilfe des Speedmixers™ DAC 800 FVZ der Firma Hauschild Engineering. Die Positionen 1 bis 4 wurden 6 Minuten lang bei 1800 U/min dispergiert, so dass ein Grindometerwert < 10 $\mu$m resultierte. Vor der Applikation wurden die Positionen 5 und 6 zugegeben. Die Proben wurden vor der Applikation mit Aceton gereinigt. Die Korrosionsschutzbeschichtung wurde mittels Spin coater appliziert. Die Trockenschichtdicke der Korrosionsschutzbeschichtung betrug 50 $\mu$m.

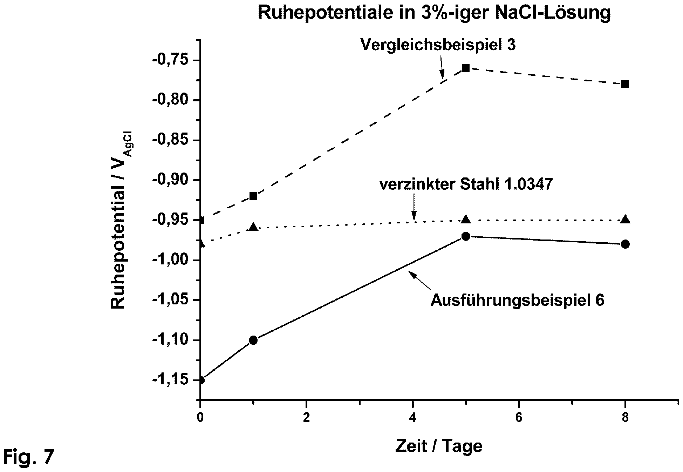

Figur 7 zeigt die Ruhepotentiale der Probe aus Ausführungsbeispiel 6 in wässriger Natriumchlorid-Lösung (3 Gew.-% NaCl) im Vergleich zu denen des Substrats aus verzinktem Stahl 1.0347 als Funktion der Zeit. Die Potentialdifferenz zwischen der Beschichtung gemäß Ausführungsbeispiel 6 und dem Substrat aus verzinktem Stahl 1.0347 gewährleistet eine kathodische Schutzwirkung. Daher kann durch eine erfindungsgemäße Beschichtung gemäß Ausführungsbeispiel 6 ein guter Korrosionsschutz erreicht werden.

Vergleichsbeispiel 3: Herstellung und Charakterisierung einer

Korrosionsschutzgrundierung ohne Korrosionsschutzpigmente auf einem Substrat aus verzinktem Stahl 1.0347

Die Zusammensetzung der Mischung zur Herstellung der Korrosionsschutzbeschichtung ist wie folgt:

| Position | Produkt | Funktion | Masse / g |
|---|---|---|---|
| 1 | Epoxid-Harz Beckopox EP 140 | Bindemittel | 7,4 |
| 2 | Methoxypropylacetat | Lösungsmittel | 2,0 |
| 3 | Pyrogene Kieselsäure Aerosil R 972 | Thixotropierungsmittel | 0,5 |
| 4 | Polypox R3 | Reaktivverdünner | 3,0 |
| 5 | Polyamidoamin Beckopox EH 633 | Härter | 3,0 |

Die Herstellung erfolgte mit Hilfe des Speedmixers™ DAC 800 FVZ der Firma Hauschild Engineering. Die Positionen 1 bis 3 wurden 6 Minuten lang bei 1800 U/min dispergiert, so dass ein Grindometerwert < 10 $\mu$m resultierte. Vor der Applikation wurden die Positionen 4 und 5 zugegeben. Die Proben wurden vor der Applikation mit Aceton gereinigt. Die Korrosionsschutzbeschichtung wurde mittels Spin coater appliziert. Die Trockenschichtdicke der Korrosionsschutzbeschichtung betrug 50 $\mu$m.

Figur 7 zeigt die Ruhepotentiale der Probe aus Vergleichsbeispiel 3 in wässriger Natriumchlorid-Lösung (3 Gew.-% NaCl) im Vergleich zu denen des unbeschichteten Substrates aus verzinktem Stahl 1.0347 als Funktion der Zeit. Die mit einer Beschichtung, die keine Korrosionsschutzpigmente enthält, versehene Probe des Vergleichsbeispiels 3 zeigt ein deutlich höheres Ruhepotential als das Substrat aus verzinktem Stahl 1.0347. Es kann keine kathodische Schutzwirkung erreicht werden.

**Patentansprüche**

1.  Gegenstand umfassend

    - einen Grundkörper aus einem Metall ausgewählt aus der Gruppe bestehend aus Aluminium und Aluminiumlegierungen oder umfassend Bereiche aus einem Metall ausgewählt aus der Gruppe bestehend aus Aluminium und Aluminiumlegierungen

    und

    - eine auf dem aus Metall bestehenden Grundkörper bzw. den metallischen Bereichen des Grundkörpers angeordnete Korrosionsschutzbeschichtung für Metalle ausgewählt aus der Gruppe bestehend aus Aluminium und Aluminiumlegierungen, umfassend

    - ein ggf. ausgehärtetes Bindemittel oder Bindemittelsystem
    - in dem ggf. ausgehärteten Bindemittel oder Bindemittelsystem verteilte Partikel eines Korrosionsschutzpigments aus einer Legierung aus Zink und Magnesium mit einem Zinkgehalt von 74 bis 90 Gew.-%, bevorzugt 74 bis 80 Gew.-%, und insbesondere 74 Gew.-%
    - vorzugsweise keine Chromverbindungen
    - ggf. weitere partikelförmige Feststoffe,

    wobei die Pigmentvolumenkonzentration in der Korrosionsschutzbeschichtung 90 bis 110 % der zum Erreichen der Perkolationsschwelle nötigen Pigmentvolumenkonzentration beträgt,
    wobei die Partikel des besagten Korrosionsschutzpigments lamellenförmige Partikel sind,
    wobei die Korrosionsschutzbeschichtung den aus Metall bestehenden Grundkörper bzw. die metallischen Bereiche des Grundkörpers zumindest teilweise bedeckt.

2.  Gegenstand nach Anspruch 1, **dadurch gekennzeichnet, dass** die Pigmentvolumenkonzentration in der Korrosionsschutzbeschichtung zwischen 30 und 82,5 Vol.-% liegt.

3.  Gegenstand nach einem der vorhergehenden Ansprüche,
    **dadurch gekennzeichnet, dass**
    mindestens 50 % der Partikel des Korrosionsschutzpigments, bevorzugt mindestens 90 % der Partikel des Korrosionsschutzpigments eine größte Abmessung zwischen 1 und 100 $\mu$m, bevorzugt zwischen 10 und 20 $\mu$m, gemessen mittels Laserbeugung, besitzen.

4.  Gegenstand nach einem der vorhergehenden Ansprüche, **dadurch gekennzeichnet, dass**
    das Bindemittel oder Bindemittelsystem ausgewählt ist aus der Gruppe bestehend aus Polyurethanen, Epoxiden, Aminen, Amiden, Kieselsäureestern, Silikonharzen, Alkydharzen, Polyestern, Acrylaten, Silicaten, modifizierten Naturkautschuken, Kunststoffdispersionen, Phenolen, Melaminen, Polyvinylacetalen, Polyvinylchloriden, wobei Kieselsäureester sowie Bindemittelsysteme umfassend Epoxide und Amidoamine und mineralische Bindemitteln aus der Gruppe der Silicate, bevorzugt sind.

5.  Gegenstand nach einem der vorhergehenden Ansprüche,
    **dadurch gekennzeichnet, dass**
    das ausgehärtete Bindemittel das Aushärtungsprodukt eines ZweikomponentenSystems aus einem Bisphenol-A Epoxidharz und einem Polyamidoaminhärter ist.

6.  Gegenstand nach einem der vorhergehenden Ansprüche, **dadurch gekennzeichnet, dass**
    die Korrosionsschutzbeschichtung

ein oder mehrere Thixotropierungsmittel ausgewählt aus der Gruppe bestehend aus pyrogenen Kieselsäuren, Schichtsilikaten, hydrierten Rizinusölen, Cellulosederivaten und Polyacrylaten, und/oder
ein oder mehrere Entwässerungsmittel ausgewählt aus der Gruppe bestehend aus Zeolithen und Isocyanaten umfasst.

7. Verwendung einer Mischung zur Herstellung einer Korrosionsschutzbeschichtung für den Korrosionsschutz von Metallen ausgewählt aus der Gruppe bestehend aus Aluminium und Aluminiumlegierungen, umfassend

- ein Bindemittel oder Bindemittelsystem
- in dem Bindemittel oder Bindemittelsystem verteilte Partikel eines Korrosionsschutzpigments aus einer Legierung aus Zink und Magnesium mit einem Zinkgehalt von 74 bis 90 Gew.-%, bevorzugt 74 bis 80 Gew.-%, und insbesondere 74 Gew.-%.
- vorzugsweise keine Chromverbindungen
- ggf. ein oder mehrere Lösungsmittel
- ggf. weitere partikelförmige Feststoffe,

wobei die auf die nichtflüchtigen Bestandteile der Mischung bezogene Pigmentvolumenkonzentration 90 bis 110 % der zum Erreichen der Perkolationsschwelle nötigen Pigmentvolumenkonzentration beträgt,
wobei die Partikel des besagten Korrosionsschutzpigments lamellenförmige Partikel sind.

8. Verwendung einer Mischung zur Herstellung einer Korrosionsschutzbeschichtung nach Anspruch 7, **dadurch gekennzeichnet, dass**
die auf die nichtflüchtigen Bestandteile der Mischung bezogene Pigmentvolumenkonzentration zwischen 30 und 82,5 Vol.-% liegt.

9. Verwendung einer Mischung zur Herstellung einer Korrosionsschutzbeschichtung nach einem der Ansprüche 7 und 8, **dadurch gekennzeichnet, dass**
mindestens 50 % der Partikel des Korrosionsschutzpigments, bevorzugt mindestens 90 % der Partikel des Korrosionsschutzpigments eine größte Abmessung zwischen 1 und 100 $\mu$m, bevorzugt zwischen 10 und 20 $\mu$m, gemessen mittels Laserbeugung, besitzen.

10. Verwendung einer Mischung zur Herstellung einer Korrosionsschutzbeschichtung nach einem der Ansprüche 7 bis 9, **dadurch gekennzeichnet, dass**
das Bindemittel oder Bindemittelsystem ausgewählt ist aus der Gruppe bestehend aus Polyurethanen, Epoxiden, Aminen, Amiden, Kieselsäureestern, Silikonharzen, Alkydharzen, Polyestern, Acrylaten, Silicaten, modifizierten Naturkautschuken, Kunststoffdispersionen, Phenolen, Melaminen, Polyvinylacetalen, Polyvinylchloriden, wobei Kieselsäureester sowie Bindemittelsysteme umfassend Epoxide und Amidoamine und mineralische Bindemitteln aus der Gruppe der Silicate bevorzugt sind.

11. Verwendung einer Mischung zur Herstellung einer Korrosionsschutzbeschichtung nach einem der Ansprüche 7 bis 10, **dadurch gekennzeichnet, dass**
das Bindemittel ein Zweikomponenten-System aus einem Bisphenol-A Epoxidharz und einem Polyamidoaminhärter ist.

12. Verwendung einer Mischung zur Herstellung einer Korrosionsschutzbeschichtung nach einem Ansprüche 7 bis 11, **dadurch gekennzeichnet, dass**
die Mischung
ein oder mehrere Thixotropierungsmittel ausgewählt aus der Gruppe bestehend aus pyrogenen Kieselsäuren, Schichtsilikaten, hydrierten Rizinusölen, Cellulosederivaten und Polyacrylaten.
und/oder
ein oder mehrere Entwässerungsmittel ausgewählt aus der Gruppe bestehend aus Zeolithen und Isocyanaten umfasst.

13. Verwendung einer Mischung zur Herstellung einer Korrosionsschutzbeschichtung nach einem der Ansprüche 7 bis 12, **dadurch gekennzeichnet, dass**
die Lösungsmittel echte Lösungsmittel, z.B. Methoxypropylacetat und/oder Methylethylketon und/oder Ethylacetat und latente Lösungsmittel z.B. Butylacetat und/oder Methylisobutylketon und/oder Xylol und/oder Aceton umfassen.

14. Verfahren zur Herstellung einer Korrosionsschutzbeschichtung auf einer Oberfläche eines Metalls ausgewählt aus der Gruppe bestehend aus Aluminium und Aluminiumlegierungen, umfassend die Schritte

  - Aufbringen einer Mischung wie in den Ansprüchen 7 bis 13 definiert auf zumindest einen Teil der Metalloberfläche,
  - ggf. Aushärtenlassen des Bindemittels.

15. Verwendung einer Korrosionsschutzbeschichtung umfassend

  - ein ggf. ausgehärtetes Bindemittel oder Bindemittelsystem
  - in dem ggf. ausgehärteten Bindemittel oder Bindemittelsystem verteilte Partikel eines Korrosionsschutzpigments aus einer Legierung aus Zink und Magnesium mit einem Zinkgehalt von 74 bis 90 Gew.-%, vorzugsweise keine Chromverbindungen
  - ggf. weitere partikelförmige Feststoffe,

wobei die Pigmentvolumenkonzentration in der Korrosionsschutzbeschichtung 90 bis 110 % der zum Erreichen der Perkolationsschwelle nötigen Pigmentvolumenkonzentration beträgt,
wobei die Partikel des besagten Korrosionsschutzpigments lamellenförmige Partikel sind,
für den Korrosionsschutz von Metallen ausgewählt aus der Gruppe bestehend aus Aluminium und Aluminiumlegierungen.

**Fig. 1**

20 mm            20 mm

Fig. 2

**Fig. 3**

20 mm

Fig. 4

20 mm

Fig. 5

20 mm

Fig. 6

Fig. 7

**EUROPÄISCHER RECHERCHENBERICHT**

Europäisches Patentamt
European Patent Office
Office européen des brevets

Nummer der Anmeldung

EP 18 16 1370

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 15 19 208 A1 (KOPPERS CO INC) 12. März 1970 (1970-03-12) * Seite 16, letzter Absatz - Seite 17, letzter Absatz; Anspruch 1; Beispiele 4,11 * * Seite 4, Zeilen 2-7 * * Seite 6, Zeilen 5-27 * * Seite 7, Zeilen 22-23 * * Seite 8, Zeilen 8-14 * * Seite 8, Zeile 18 - Seite 9, Zeile 4 * * Seite 9, Absatz 3 * ----- | 1-15 | INV. C09D5/08 C09D7/61 C22C18/00 C23F13/02 |
| A | US 3 399 160 A (KEMP WOODROW E) 27. August 1968 (1968-08-27) * Spalte 4, Zeilen 25-45; Anspruch 1; Beispiel IV * * Spalte 5, Zeile 66 - Spalte 6, Zeile 44 * ----- | 1-15 | |
| A | US 3 231 535 A (KEMP WOODROW E) 25. Januar 1966 (1966-01-25) * Spalte 2, Zeilen 3-17 * * Spalte 3, Zeilen 1-23,45-50; Ansprüche 2-5; Beispiel III * ----- | 1-15 | RECHERCHIERTE SACHGEBIETE (IPC) C09D C22C C23F |
| A | EP 1 741 760 A1 (NIPPON STEEL CORP [JP]) 10. Januar 2007 (2007-01-10) * e.g. coatings 1,2,21; Absätze [0043] - [0051]; Beispiel 1; Tabelle 1 * ----- | 1-15 | |
| A | US 2 877 126 A (LAWRENCE WHITBY) 10. März 1959 (1959-03-10) * das ganze Dokument * ----- | 1-15 | |
| A | US 6 627 065 B1 (MACDOWELL LOUIS G [US] ET AL) 30. September 2003 (2003-09-30) * das ganze Dokument * ----- -/-- | 1-15 | |

Der vorliegende Recherchenbericht wurde für alle Patentansprüche erstellt

| Recherchenort | Abschlußdatum der Recherche | Prüfer |
|---|---|---|
| München | 29. Juni 2018 | Schmitt, Johannes |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

Seite 1 von 3

**Europäisches Patentamt**
**European Patent Office**
**Office européen des brevets**

## EUROPÄISCHER RECHERCHENBERICHT

Nummer der Anmeldung

EP 18 16 1370

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | WO 2005/051551 A1 (NDSU RES FOUNDATION [US]; BIERWAGEN GORDON P [US]; NANNA MICHAEL E [US] 9. Juni 2005 (2005-06-09) * das ganze Dokument * ----- | 1-15 | |
| A | DATABASE WPI Week 199016 Thomson Scientific, London, GB; AN 1990-121485 XP002618652, & JP 2 073932 A (KOBE STEEL LTD) 13. März 1990 (1990-03-13) * Zusammenfassung * ----- | 1-15 | |
| A | DATABASE WPI Week 200605 Thomson Scientific, London, GB; AN 2006-047235 XP002781740, -& WO 2005/116148 A1 (NIPPON STEEL CORP) 8. Dezember 2005 (2005-12-08) * Zusammenfassung * * Anspruch 9; Beispiel 9; Tabellen 1,2 * ----- | 1-15 | |
| | | | **RECHERCHIERTE SACHGEBIETE (IPC)** |
| A | DATABASE WPI Week 200011 Thomson Scientific, London, GB; AN 2000-119548 XP002781741, -& JP H11 343422 A (MITSUI KINZOKU TORYO KAGAKU KK) 14. Dezember 1999 (1999-12-14) * Zusammenfassung * * Beispiele 2,6,10; Tabellen 1-3 * ----- | 1-15 | |
| A | US 2004/206266 A1 (MAZE ETIENNE GEORGES [FR] ET AL) 21. Oktober 2004 (2004-10-21) * Anspruch 4; Beispiel 1 * ----- -/-- | 1-15 | |

Der vorliegende Recherchenbericht wurde für alle Patentansprüche erstellt

| Recherchenort | Abschlußdatum der Recherche | Prüfer |
|---|---|---|
| München | 29. Juni 2018 | Schmitt, Johannes |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..............................................................................
& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

Nummer der Anmeldung

EP 18 16 1370

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 32 32 755 A1 (INMONT GMBH [DE]) 8. März 1984 (1984-03-08) * Seite 5, Zeile 15 - Seite 6, Zeile 31 * ----- | 1-15 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| München | 29. Juni 2018 | Schmitt, Johannes |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes
    Dokument

EPO FORM 1503 03.82 (P04C03)

Seite 3 von 3

**ANHANG ZUM EUROPÄISCHEN RECHERCHENBERICHT**
**ÜBER DIE EUROPÄISCHE PATENTANMELDUNG NR.**

EP 18 16 1370

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-06-2018

| Im Recherchenbericht angeführtes Patentdokument | Datum der Veröffentlichung | Mitglied(er) der Patentfamilie | Datum der Veröffentlichung |
|---|---|---|---|
| DE 1519208 A1 | 12-03-1970 | DE 1519208 A1<br>ES 363779 A3 | 12-03-1970<br>16-12-1970 |
| US 3399160 A | 27-08-1968 | KEINE | |
| US 3231535 A | 25-01-1966 | DE 1519207 A1<br>US 3231535 A | 18-12-1969<br>25-01-1966 |
| EP 1741760 A1 | 10-01-2007 | AU 2005238382 A1<br>CA 2564890 A1<br>CN 1950465 A<br>EP 1741760 A1<br>JP 4585224 B2<br>JP 2005314501 A<br>KR 20070001229 A<br>MY 142060 A<br>NZ 550694 A<br>TW I288771 B<br>US 2007209555 A1<br>WO 2005105934 A1 | 10-11-2005<br>10-11-2005<br>18-04-2007<br>10-01-2007<br>24-11-2010<br>10-11-2005<br>03-01-2007<br>30-08-2010<br>29-01-2010<br>21-10-2007<br>13-09-2007<br>10-11-2005 |
| US 2877126 A | 10-03-1959 | KEINE | |
| US 6627065 B1 | 30-09-2003 | KEINE | |
| WO 2005051551 A1 | 09-06-2005 | BR PI0416476 A<br>CA 2545091 A1<br>EP 1689534 A1<br>ES 2462920 T3<br>JP 4733643 B2<br>JP 2007515550 A<br>KR 20060135654 A<br>US 2007128351 A1<br>US 2014191163 A1<br>WO 2005051551 A1 | 06-03-2007<br>09-06-2005<br>16-08-2006<br>26-05-2014<br>27-07-2011<br>14-06-2007<br>29-12-2006<br>07-06-2007<br>10-07-2014<br>09-06-2005 |
| JP 2073932 A | 13-03-1990 | | |
| WO 2005116148 A1 | 08-12-2005 | TW 200617120 A<br>WO 2005116148 A1 | 01-06-2006<br>08-12-2005 |
| JP H11343422 A | 14-12-1999 | KEINE | |
| US 2004206266 A1 | 21-10-2004 | US 2004206266 A1<br>US 2007172680 A1<br>US 2010266872 A1 | 21-10-2004<br>26-07-2007<br>21-10-2010 |

EPO FORM P0461

Für nähere Einzelheiten zu diesem Anhang : siehe Amtsblatt des Europäischen Patentamts, Nr.12/82

Seite 1 von 2

**ANHANG ZUM EUROPÄISCHEN RECHERCHENBERICHT**
**ÜBER DIE EUROPÄISCHE PATENTANMELDUNG NR.**

EP 18 16 1370

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-06-2018

| Im Recherchenbericht angeführtes Patentdokument | Datum der Veröffentlichung | Mitglied(er) der Patentfamilie | Datum der Veröffentlichung |
|---|---|---|---|
| DE 3232755 A1 | 08-03-1984 | KEINE | |

Für nähere Einzelheiten zu diesem Anhang : siehe Amtsblatt des Europäischen Patentamts, Nr.12/82

EPO FORM P0461

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005051551 A

- WO 2005051551 A1